# EUROPEAN PATENT SPECIFICATION

(11) **EP 4 368 912 B1**
(45) Date of publication and mention of the grant of the patent: **14.05.2025**
(21) Application number: 23207799.0
(22) Date of filing: 03.11.2023
(51) Int. Cl.: F24S 25/11, F24S 25/634, F24S 25/636, F24S 25/70, H02S 20/20

(54) **MOUNTING SYSTEM FOR PHOTOVOLTAIC PANELS**
MONTAGESYSTEM FÜR PHOTOVOLTAIKPANEELE
SYSTÈME DE MONTAGE POUR PANNEAUX PHOTOVOLTAÏQUES

(30) Priority: 08.11.2022 IT 202200023079
(43) Date of publication of application: 15.05.2024
(73) Proprietor: Contact Italia srl, 70022 Altamura (BA) (IT)
(72) Inventor: MAGGI, Pietro Antonio, 70022 ALTAMURA (BA) (IT)
(74) Representative: Giuliano, Natalia

(56) References cited:
- EP-A2- 2 653 804
- WO-A2-2013/022277
- DE-U1- 202016 100 753
- JP-A- 2010 258 024
- KR-B1- 101 064 714
- US-B2- 10 931 225

## Description

The present invention relates to an optimized mounting system for photovoltaic panels.

In particular, the present invention relates to an optimized mounting system for photovoltaic panels, of the type used for the installation of latest generation panels or panels with greater powers and large dimensions.

Various photovoltaic panel mounting systems are currently known.

An example is described in the document EP3161390B1, which describes a system for the inclined arrangement of photovoltaic modules on flat roofs comprising a front and rear support section. The profiles are mounted in parallel on the flat roof using retaining elements fixed to the roof. Preferably, the upper sides of both support profiles are rounded so that the photovoltaic module rests tangentially or substantially tangentially on said profiles. The support sections can thus provide optimal structural support for photovoltaic modules of various sizes at various angles.

A further mounting system is described in the patent EP2297790B1, and in particular an installation system for industrial photovoltaic systems which is intended to reliably hold large-scale frameless thin-film modules, taking into account high wind and snow loads. The installation system includes two profiled crosspieces, parallel and spaced from each other and equipped with planar support surfaces. Furthermore, it includes a plurality of blocks fixed to the back of a photovoltaic module using adhesive.

Another solution is reported in the patent EP2653804 that describes a support for solar panels defining a capture plane; such support comprises at least one wedge made from material comprising cement, suitable for positioning a solar panel on a support plane and defining a contact surface suitable to come into contact with the support plane and an upper surface, suitable for supporting the capture plane inclined in relation to the support plane.

However, although advantageous in many aspects, currently known mounting systems are not optimized for latest generation panels, or for panels with large dimensions.

The aim of the present invention is to provide an optimized mounting system for photovoltaic panels which allows the fixing of photovoltaic panels of large dimensions, and in an optimized, safe and practical way, and therefore having characteristics such as to overcome the limits which still influence the mounting systems of photovoltaic panels with reference to the prior art.

According to the present invention, an optimized mounting system for photovoltaic panels is provided, as defined in claim 1.

For a better understanding of the present invention, a preferred embodiment is now described, purely by way of nonlimiting example, with reference to the attached drawings, in which:
- figures 1.a, 1.b, 1.c show respectively a side, three-dimensional and front view of an optimized mounting system for photovoltaic panels, according to the invention;
- figures 2.a, 2.b, 2.c show respectively a three-dimensional view, a detail view of a component and a side view of the optimized mounting system for photovoltaic panels, according to the invention;
- figures 3.a, 3.b show respectively detail views of components of the optimized mounting system for photovoltaic panels, according to the invention;
- figures 4a-4d show schematic overall and detailed views of the optimized mounting system for photovoltaic panels, according to the invention;
- figures 5a-5f show schematic overall and detailed views of the optimized mounting system for photovoltaic panels according to the invention;
- figures 6a-6d show schematic overall and detailed views of the optimized mounting system for photovoltaic panels not according to the invention.

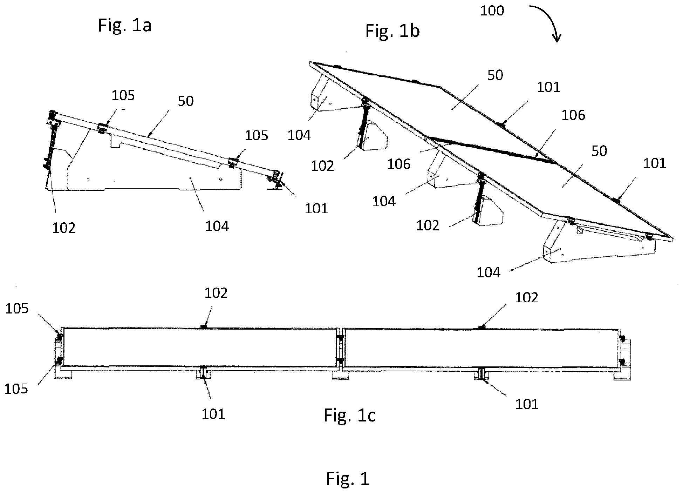

With reference to these figures, and in particular to figure 1, an optimized mounting system for photovoltaic panels is shown, according to the invention.

In more detail, an optimized mounting system 100 for photovoltaic panels suitable for mounting at least one panel 50 on a surface such as a roof or the ground, comprehends:
- at least one front support 101 and at least one rear support 102 suitable for creating a fixing point on a long side, or longer side, L2 of the panel 50.

The system 100 further includes at least two end clamps 105 and at least two central clamps 106, and a plurality of ballast blocks 104, preferably two ballast blocks 104.

As shown in figure 1, the panel 50 is initially blocked in two points on its short side, or lower side, L1 by means of two end clamps 105 and central clamps 106 which are fixed on ballast blocks 104, preferably two terminal ballast blocks 104 and a central block.

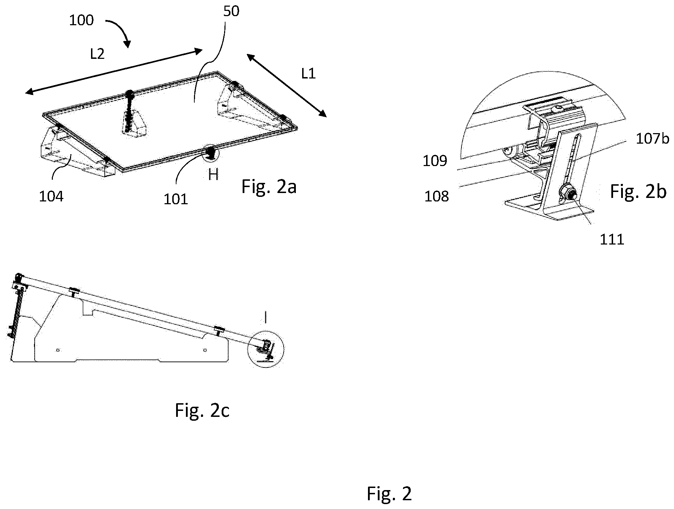

A panel 50 typically has a rectangular shape with a lower side L1 and a longer side L2, indicated in figure 2.

A clamp is attachable to the ballast block 104 with either a snap fit or a threaded fit.

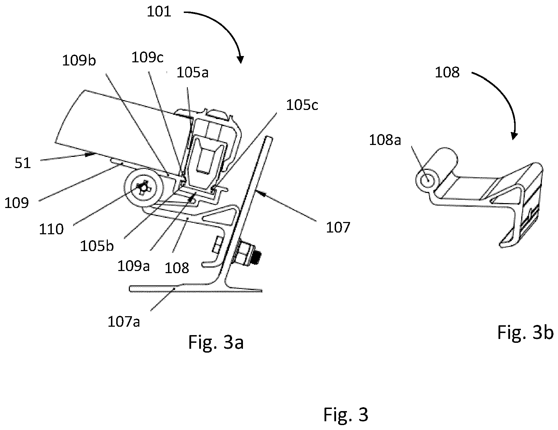

According to the invention, the front support 101 is composed, as shown in figure 3.a, of a lower base profile 107, an intermediate profile 108 and an upper profile 109.

The lower base profile 107 is characterized by a lower flat portion 107a suitable for being placed directly in contact with the covering or the base surface, by an inclined portion, which extends from the lower flat portion 107a, equipped with a slot 107b suitable for creating a first bolted coupling 111 with the intermediate profile 108, as shown in the detail of fig. 2.b.

The slot 107b allows to adjust the position of the intermediate profile 108 and consequently the height of the panel 50 with respect to the base surface, by sliding the first bolted coupling 111.

As shown in figure 3.b, the intermediate profile 108 is equipped with a cylindrical cavity 108a suitable for creating a hinge 110, by means of a second connection bolted with the upper profile 109. This cylindrical cavity 108a, or hinge, allows the adjustment of the position of panel 50.

The upper profile 109 is equipped with a flap 109b and a groove 109a, and a vertical wall 109c.

The end clamp is equipped with a first flap 105a and two lower flaps 105b, 105c in its lower part.

The frame 51 of the panel 50 rests on the flap 109b of the upper profile 109, abutting with the first flap 105a of the end clamp.

The lower part of the clamp being equipped with two flaps 105b, 105c, is mounted to slide into the groove 109a of the upper profile 109. Advantageously, this coupling prevents the rotation of the core of the clamp during tightening of the screw. The prevention of rotation is increased by the presence of the vertical wall 109c on the upper profile 109.

The clamp adjusts in height adapting to the thickness of the panel 50.

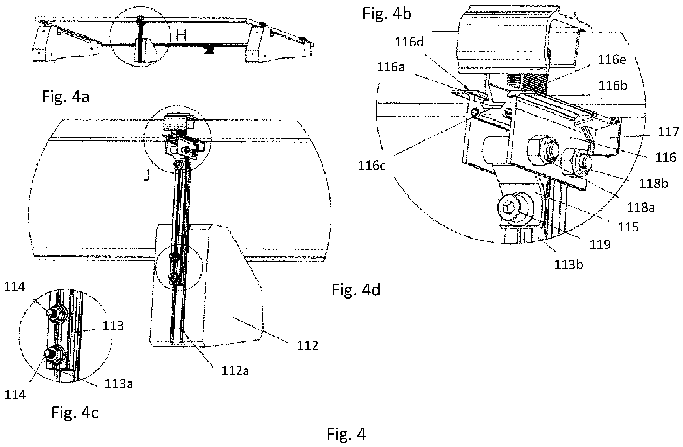

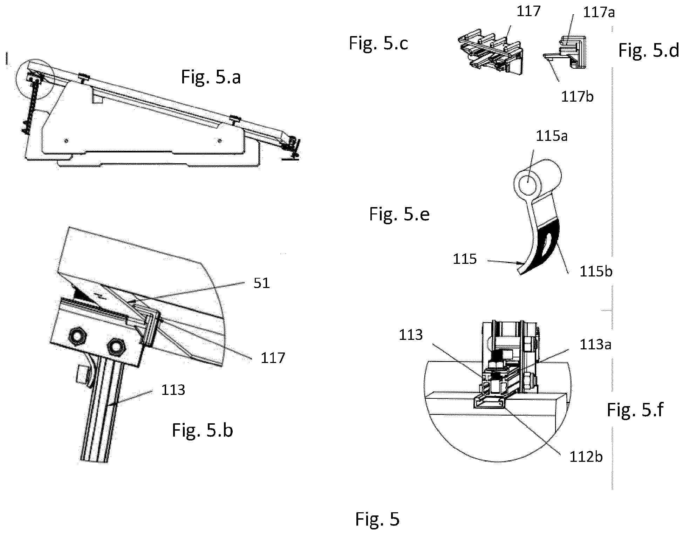

According to the invention, the rear support 102, shown in figures 4 and 5, is composed of:
- a cement block 112,
- a strut profile 113,
- a hinge profile 115,
- a superior profile 116 and from
- a frame locking slide 117.

The cement block 112 acts as a support on the covering or base surface and as a support for the strut profile 113.

The ballast block, or cement block 112 includes an aluminum profile 112a having a groove 112b in which a bolted coupling 114 is made to carry out the assembly of the strut profile 113.

The strut profile 113 is composed of an upper groove 113a in which a square nut necessary for mounting the hinge profile 115 can slide freely.

The upper profile 116 is fixed to the hinge profile 115 and to the strut profile 113 by means of two bolted connections 118a, 118b.

The bolted connection 118a with the hinge profile 115 is made by exploiting the cylindrical housing 115a thereof.

On the curved part of the hinge profile 115 there is a knurling 115b which allows to increase the friction with the upper surface 113b of the strut profile 113 during the adjustment phase of the panel 50.

The frame locking slide 117 is pre-assembled with the upper profile 116 before assembling the panel 50.

A hook is present on the front end 117b and snaps into a hole present in the upper groove 116c of the profile.

On the upper part of the frame locking slide 117 there is a slot 117a suitable for housing the frame 51 of the panel 50.

The panel 50 is mounted by placing the frame 51 on the two tabs 116d, 116e of the upper profile 116.

The frame 51 is translated into the slot 117a of the frame locking slide 117: this represents a safety locking of the panel 50 which is prevented from sliding downwards in the remote event in which the upper end clamp 105 were to lose its effectiveness in locking the frame.

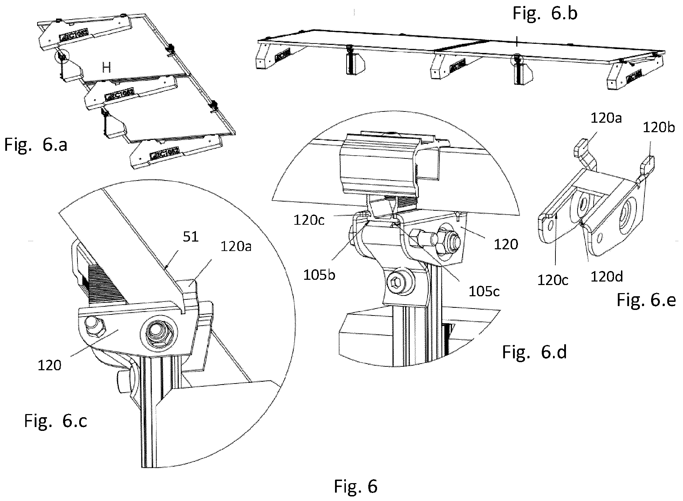

In an example, not part of the present invention, the upper profile 116 preferably made of aluminum can also be replaced by an upper profile 120 preferably made of punched sheet metal. In this second configuration shown in figure 6, the frame locking slide 117 is replaced by two flaps 120a, 120b present on the upper rear part of the upper profile 120.

Advantageously that allows to speed up the pre-assembly operations.

The two flaps 105b, 105c present in the lower part of the core of the end clamp 105 are coupled to insert with the two guides 120c, 120d present on the upper part of the upper profile 120. The clamp is free to translate until it reaches the stop of the frame of panel 51.

The main advantage of the 100 system is the possibility of mounting large panels that require at least one fixing point on the long side L2.

Furthermore, the system adapts to the different dimensions of the short side of the panels by exploiting the adjustability of the supports 101, 102 both in the vertical and rotary directions.

According to one aspect of the invention, by using the same components already described and by varying only the geometry of the cement block 112 of the rear support 102 it is possible to achieve the assembly of panels with variable inclination up to 15°.

Advantageously, the optimized mounting system for photovoltaic panels is versatile, simple and stable.

Finally, it is clear that the optimized mounting system for photovoltaic panels described and illustrated here, modifications and variations can be made without departing from the protective scope of the present invention, as defined in the attached claims.

## Claims

1. Optimized mounting system (100) for photovoltaic panels, suitable for mounting at least one panel (50) having a substantially rectangular shape with longer side L2 and short side L1 on a base surface, comprising:
- at least two end clamps (105) and at least two central clamps (106);
- a plurality of ballast blocks (104) suitable for fixing a panel (50) in two points on the short side L1 by means of the at least two end clamps (105) and the at least two central clamps (105);
**characterized in that** the optimized mounting system (100) further comprises:
- at least one front support (101) and at least one rear support (102) suitable for creating a fixing point on the longer side L2; and **in that** said at least one front support (101) comprises:
- a lower base profile (107) having a lower flat portion (107a) suitable for being placed directly in contact with the base surface, an inclined portion which extends from the lower flat portion (107a) and includes a slot (107b);
- an intermediate profile (108) which can be fixed to the inclined portion by means of a first bolted coupling (111) in the slot (107b), and equipped with a cylindrical cavity (108a);
- an upper profile (109) which can be fixed to the intermediate profile (108) by means of a hinge (110) in the cylindrical cavity (108a);
and **in that** said rear support (102) includes:
- a hinge profile (115);
- a strut profile (113) having an upper groove (113a) in which a fastening nut of the hinge profile (115) is slidably fixed;
- a cement block (112) suitable to act as a rest on the base surface and support of the strut profile (113), said cement block (112) comprising an aluminum profile (112a) having a groove (112b) in which a coupling (114) is bolted with the strut profile (113);
- an upper profile (116) fixed to the hinge profile (115) and to the strut profile (113) by two bolted connections; and
- a frame locking slide (117) which can be pre-assembled with the upper profile (116) before assembling the panel (50) using the system (100).

2. System (100) according to claim 1, **characterized in that** said upper profile (109) includes a flap (109b) suitable for housing a frame of the panel (50), a groove (109a) and a vertical wall (109c), and that each end clamp includes a first flap (105a) and two lower flaps (105b, 105c) suitable for inserting in the groove (109a), the flap (109b) being suitable for housing a frame (51) of the panel (50) in such a way that it abuts with the first flap (105a) of the end clamp.

3. System (100) according to claim 1, **characterized in that** said frame locking slide (117) includes at one of its front ends a hook (117b) capable of snap-coupling into a hole present in an upper groove (116c) of the upper profile (116), and in its upper part it includes a slot (117a) suitable for housing the frame (51) of the panel (50).

## Patentansprüche

1. Optimiertes Montagesystem (100) für photovoltaische Paneele, geeignet für die Montage mindestens eines Paneels (50) mit einer im Wesentlichen rechteckigen Form mit einer längeren Seite L2 und einer kurzen Seite L1 auf einer Grundfläche, umfassend:
- mindestens zwei Endklammern (105) und mindestens zwei Mittelklammern (106);
- eine Vielzahl von Ballastblöcken (104), die geeignet sind, eine Platte (50) an zwei Punkten auf der kurzen Seite L1 mit Hilfe der mindestens zwei Endklammern (105) und der mindestens zwei Mittelklammern (105) zu befestigen;
**dadurch gekennzeichnet, dass** das optimierte Montagesystem (100) weiterhin umfasst:
- mindestens eine vordere Stütze (101) und mindestens eine hintere Stütze (102), die geeignet sind, einen Befestigungspunkt an der längeren Seite L2 zu schaffen; und dass die besagte mindestens eine vordere Stütze (101) umfasst:
- ein unteres Basisprofil (107) mit einem unteren flachen Abschnitt (107a), der geeignet ist, direkt mit der Basisoberfläche in Kontakt gebracht zu werden, und einem geneigten Abschnitt, der sich von dem unteren flachen Abschnitt (107a) aus erstreckt und einen Schlitz (107b) aufweist;
- ein Zwischenprofil (108), das mittels einer ersten Schraubverbindung (111) in dem Schlitz (107b) an dem geneigten Teil befestigt werden kann und mit einem zylindrischen Hohlraum (108a) ausgestattet ist;
- ein oberes Profil (109), das mittels eines Scharniers (110) in dem zylindrischen Hohlraum (108a) an dem Zwischenprofil (108) befestigt werden kann;
und dass die besagte hintere Stütze (102) umfasst:
- ein Scharnierprofil (115);
- ein Strebenprofil (113) mit einer oberen Nut (113a), in der eine Befestigungsmutter des Scharnierprofils (115) gleitend befestigt ist;
- einen Zementblock (112), der geeignet ist, als Auflage auf der Grundfläche und als Stütze des Strebenprofils (113) zu dienen, wobei der Zementblock (112) ein Aluminiumprofil (112a) mit einer Nut (112b) umfasst, in der eine Verbindung (114) mit dem Strebenprofil (113) verschraubt ist;
- ein oberes Profil (116), das durch zwei Schraubverbindungen an dem Scharnierprofil (115) und dem Strebenprofil (113) befestigt ist; und
- einen Rahmenverriegelungsschieber (117), der mit dem oberen Profil (116) vormontiert werden kann, bevor die Platte (50) mit dem System (100) zusammengebaut wird.

2. System (100) nach Anspruch 1, **dadurch gekennzeichnet, dass** das obere Profil (109) eine Klappe (109b), die zur Aufnahme eines Rahmens der Platte (50) geeignet ist, eine Nut (109a) und eine vertikale Wand (109c) umfasst, und dass jede Endklammer eine erste Klappe (105a) und zwei untere Klappen (105b, 105c) aufweist, die zum Einsetzen in die Nut (109a) geeignet sind, wobei die Klappe (109b) geeignet ist, einen Rahmen (51) der Platte (50) so aufzunehmen, dass er an der ersten Klappe (105a) der Endklammer anliegt.

3. System (100) nach Anspruch 1, **dadurch gekennzeichnet, dass** der Schieber (117) zur Verriegelung des Rahmens an einem seiner vorderen Enden einen Haken (117b) aufweist, der in ein in einer oberen Nut (116c) des oberen Profils (116) vorhandenes Loch einrasten kann, und dass er in seinem oberen Teil einen Schlitz (117a) aufweist, der zur Aufnahme des Rahmens (51) der Platte (50) geeignet ist.

## Revendications

1. Système de montage optimisé (100) pour panneaux photovoltaïques, adapté au montage d'au moins un panneau (50) de forme sensiblement rectangulaire avec le côté le plus long L2 et le côté le plus court L1 sur une surface de base, comprenant :
- au moins deux pinces d'extrémité (105) et au moins deux pinces centrales (106) ;
- plusieurs blocs de lestage (104) permettant de fixer un panneau (50) en deux points sur le petit côté L1 au moyen d'au moins deux pinces d'extrémité (105) et d'au moins deux pinces centrales (105) ;
**caractérisé par le fait que** le système de montage optimisé (100) comprend en outre :
- au moins un support avant (101) et au moins un support arrière (102) adaptés à la création d'un point de fixation sur le côté le plus long L2 ; et en ce que ledit au moins un support avant (101) comprend :
- un profilé de base inférieur (107) ayant une partie plate inférieure (107a) apte à être placée directement en contact avec la surface de base, une partie inclinée qui s'étend à partir de la partie plate inférieure (107a) et comprend une fente (107b) ;
- un profilé intermédiaire (108) qui peut être fixé à la partie inclinée au moyen d'un premier raccord boulonné (111) dans la fente (107b), et équipé d'une cavité cylindrique (108a) ;
- un profilé supérieur (109) qui peut être fixé au profilé intermédiaire (108) au moyen d'une charnière (110) dans la cavité cylindrique (108a) ;
et en ce que ledit support arrière (102) comprend :
- un profilé de charnière (115) ;
- un profilé d'entretoise (113) ayant une rainure supérieure (113a) dans laquelle un écrou de fixation du profilé de charnière (115) est fixé de manière coulissante ;
- un bloc de ciment (112) apte à servir d'appui sur la surface de base et de support au profil de l'entretoise (113), ledit bloc de ciment (112) comprenant un profil en aluminium (112a) ayant une rainure (112b) dans laquelle un raccord (114) est boulonné avec le profil de l'entretoise (113) ;
- un profilé supérieur (116) fixé au profilé de charnière (115) et au profilé d'entretoise (113) par deux assemblages boulonnés ; et
- une glissière de verrouillage du cadre (117) qui peut être préassemblée avec le profil supérieur (116) avant l'assemblage du panneau (50) à l'aide du système (100).

2. Système (100) selon la revendication 1, **caractérisé en ce que** ledit profilé supérieur (109)comprend un rabat (109b) apte à loger un cadre du panneau (50), une rainure (109a) et une paroi verticale (109c), et **en ce que** chaque pince d'extrémité comprend un premier rabat (105a) et deux rabats inférieurs (105b, 105c) aptes à s'insérer dans la rainure (109a), le rabat (109b) étant apte à loger un cadre (51) du panneau (50) de manière à venir en butée contre le premier rabat (105a) de l'étrier d'extrémité.

3. Système (100) selon la revendication 1, **caractérisé en ce que** ladite glissière de verrouillage du cadre (117) comprend à l'une de ses extrémités avant un crochet (117b) capable de s'encliqueter dans un trou présent dans une rainure supérieure (116c) du profil supérieur (116), et dans sa partie supérieure elle comprend une fente (117a) appropriée pour loger le cadre (51) du panneau (50).
